# EUROPÄISCHE PATENTSCHRIFT

(11) **EP 3 544 890 B1**
(45) Veröffentlichungstag und Bekanntmachung des Hinweises auf die Patenterteilung: **29.05.2024**
(21) Anmeldenummer: 17800867.8
(22) Anmeldetag: 20.11.2017
(51) Int. Cl.: B63G 8/00, B60Q 3/74, B60Q 3/40

(54) **UNTERSEEBOOT MIT WENIGSTENS EINER ERSTEN BELEUCHTUNGSVORRICHTUNG ZUR ERZEUGUNG VERSCHIEDENER FARBTEMPERATUREN**
SUBMARINE WITH AT LEAST A FIRST ILLUMINATION DEVICE FOR GENERATING DIFFERENT COLOUR TEMPERATURES
SOUS-MARIN DOTÉ AU MOINS D'UN PREMIER DISPOSITIF D'ÉCLAIRAGE POUR LA GÉNÉRATION DE DIFFÉRENTES TEMPÉRATURES DE COULEUR

(30) Priorität: 23.11.2016 DE 102016223104
(43) Veröffentlichungstag der Anmeldung: 02.10.2019
(73) Patentinhaber: thyssenkrupp Marine Systems GmbH, 24143 Kiel (DE); thyssenkrupp AG, 45143 Essen (DE)
(72) Erfinder: HOFMANN, Thomas, 24943 Flensburg (DE); KÜCÜK, Burak, 85591 Vaterstetten (DE)
(74) Vertreter: thyssenkrupp Intellectual Property GmbH
(86) Internationale Anmeldenummer: PCT/EP2017/079824
(87) Internationale Veröffentlichungsnummer: WO 2018/095874

(56) Entgegenhaltungen:
- EP-A1- 1 792 778
- WO-A1-2014/038279
- DE-A1-102006 006 364
- DE-A1-102012 202 805
- DE-A1-102015 109 663
- DE-U1- 9 403 028
- DE-U1-202016 102 798
- US-A1- 2012 126 723
- US-A1- 2015 170 604

## Beschreibung

Die Erfindung betrifft ein Unterseeboot mit wenigstens einer ersten Beleuchtungsvorrichtung zur Erzeugung verschiedener Farbtemperaturen.

Es ist bekannt, dass Tageslicht einen großen Einfluss auf den Biorhythmus hat. In einem Unterseeboot kann die Besatzung im getauchten Zustand jedoch das Tageslicht nicht wahrnehmen. Hinzukommt, dass ein getauchtes Unterseeboot sich auch durch Zeitzonen bewegen kann. Da die Besatzung bei langen Tauchfahrten nicht langsam auf die Zeitumstellung eingestellt wird, kann es zu einer Verschiebung des Tagesrhythmus der Besatzung gegenüber der lokalen Uhrzeit kommen.

Aus der DE 10 2012 202805 A1 ist ein Unterseeboot mit mindestens einer Liegeeinrichtung bekannt, bei welcher eine innerhalb des Bootskörpers zumindest vertikal verspannte Gurtanordnung eine Tragstruktur für mindestens eine Koje bildet.

Aus der EP 1 792 778 A1 ist eine Beleuchtung des Innenraums eines Schienenfahrzeugs bekannt, wobei an Verkleidungsteilen an beliebigen Stellen und in variabler Anzahl Beleuchtungselemente angebracht sind.

Aus der US 29'012 / 126 723 A1 ist eine Innenbeleuchtung und ein OLED-Panel bekannt.

Auf der anderen Seite besteht in Unterseebooten jedoch die Forderung, dass zum einen alle Vorrichtungen platzsparend und gleichzeitig schocksicher integriert werden müssen. Die Integrationsdichte auf einem Unterseeboot ist extrem hoch, da Platz hier sehr wenig vorhanden ist. Hierdurch ist die Installation üblicher Vorrichtungen nicht möglich. Des Weiteren müssen alle Gegenstände so gesichert sein, dass diese auch bei einer Schockeinwirkung keine Gefährdung für Boot und Besatzung darstellen.

Aufgabe der Erfindung ist es, ein Unterseeboot zu schaffen, welches bei langen Tauchfahrten eine optimale Umgebung für die Besatzung schafft.

Gelöst wird diese Aufgabe durch ein Unterseeboot mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Unterseeboot mit wenigstens einer ersten Beleuchtungsvorrichtung weist einen Druckkörper auf, wobei der Druckkörper Spanten aufweist. Spanten dienen zur Versteifung des Druckkörpers, damit dieser größere Tauchtiefen bei vergleichsweise geringer Dicke standhalten kann. Die wenigstens eine erste Beleuchtungsvorrichtung ist zur Erzeugung verschiedener Farbtemperaturen ausgebildet. Die wenigstens eine erste Beleuchtungsvorrichtung ist zwischen den Spanten des Druckkörpers des Unterseeboots angeordnet, wobei die wenigstens eine erste Beleuchtungsvorrichtung dem Krümmungsverlauf des Druckkörpers angepasst ist.

Durch die Anordnung zwischen den Spanten kann die wenigstens eine erste Beleuchtungsvorrichtung platzsparend und sicher in das Bootsinnere integriert werden. Durch die Anpassung an den Krümmungsverlauf entsteht der Eindruck eines Fensters, was den Eindruck einer natürlichen Umgebung verstärkt.

Bevorzugt ist die Beleuchtungsvorrichtung in einer Ausführungsform flächig ausgeführt. In dieser Ausführungsform weist die Beleuchtungsvorrichtung eine flächige Ausdehnung auf. Besonders bevorzugt strahlt die Beleuchtungsvorrichtung flächig Licht ab.

In einer alternativen Ausführungsform weist die Beleuchtungsvorrichtung wenigstens zwei Leuchtmittel, besonders bevorzugt eine Vielzahl an Leuchtmitteln auf. Die Leuchtmittel sind vorzugsweise über die Beleuchtungsvorrichtung verteilt. Besonders bevorzugt ist zwischen den Leuchtmitteln und dem Inneren des Unterseeboots wenigstens ein Diffusor angeordnet.

Anpassung an den Krümmungsverlauf ist beispielsweise gegeben, wenn der Druckkörper einen runden Querschnitt aufweist und die wenigstens eine erste Beleuchtungsvorrichtung in Form eines Kreisausschnitts mit einem geringeren Radius als der Druckkörper ausgebildet ist, dabei aber die gleiche Rotationsachse wie der Druckkörper aufweist, also die Wand des Druckkörpers und der gekrümmte Leuchtkörper auf konzentrischen Kreisen unterschiedlicher Radien liegen. Für einen ovalen Querschnitt des Druckkörpers ergibt sich dieses analog. Insbesondere sind Druckkörper und die dem Innenraum des Unterseeboots zugewandte Oberfläche der wenigstens einen ersten Beleuchtungsvorrichtung äquidistant.

Die wenigstens eine erste Beleuchtungsvorrichtung ist vorzugsweise zur Erzeugung von Farbtemperaturen von 1500 K bis 16000 K, insbesondere von 2400 K bis 12000 K ausgebildet. Die wenigstens eine erste Beleuchtungsvorrichtung kann zur kontinuierlichen Einstellung der Farbtemperatur in dem Bereich oder zur Einstellung einzelner diskreter Farbtemperaturen innerhalb des Bereiches ausgebildet sein, wobei die einzelnen diskreten Farbtemperaturen vorzugsweise über den Bereich verteilt sind.

In einer weiteren Ausführungsform der Erfindung ist die wenigstens eine erste Beleuchtungsvorrichtung zur tageszeitspezifischen Wiedergabe der Farbtemperatur des Himmels ausgebildet. Die Steuerung kann hierbei nach Ortszeit erfolgen. Zusätzlich können in einer bevorzugten Weiterbildung auch Wetterdaten, beispielsweise Bewölkungsgrad, in die Auswahl der Farbtemperatur mit einbezogen werden.

Erfindungsgemäß ist die wenigstens eine erste Beleuchtungsvorrichtung ausschließlich zwischen den Spanten angeordnet und erstreckt sich nicht in Längsrichtung des Unterseebootes über die Spanten in das Innere des Unterseeboots. Durch die Anordnung zwischen den Spanten wird zum einen der Charakter eines Fensters verstärkt, zum anderen wird Platz genutzt, welcher nur bedingt anderweitig genutzt werden kann.

In einer weiteren Ausführungsform der Erfindung ist die wenigstens eine erste Beleuchtungsvorrichtung zwischen zwei benachbarten Spannten vollflächig angeordnet. Auch dieses verstärkt den Fenstercharakter. Des Weiteren ist die beleuchtende Fläche hierdurch maximiert. Unter vollflächig ist hier die gesamte Breite zwischen zwei benachbarten Spanten zu verstehen. Die Beleuchtungsvorrichtung erstreckt sich somit in diesem Fall von einem zum anderen Spant und gibt so die Illusion eines offenen Zwischenraumes.

In einer weiteren Ausführungsform der Erfindung ist die wenigstens eine erste Beleuchtungsvorrichtung im oberen Bereich angeordnet, wobei der obere Bereich der als ± 80°, bevorzugt ± 60°, gegenüber dem höchst gelegenem Punkt des kreisförmigen Querschnitts des Druckkörpers als 0° betrachtet wird. Hierdurch wird der Eindruck des Himmels verstärkt. Bevorzugt erstreckt sich die wenigstens eine erste Beleuchtungsvorrichtung über einen Kreiswinkel von bis zu 120°, insbesondere von bis zu 90°, insbesondere von bis zu 60°, insbesondere von bis zu 45°. Insbesondere erstreckt sich die wenigstens eine erste Beleuchtungsvorrichtung über einen Kreiswinkel von wenigstens 10°, insbesondere von wenigstens 20°, insbesondere von wenigstens 35°. Alternativ können anstelle der wenigstens einen ersten Beleuchtungsvorrichtung auch insbesondere zwei Beleuchtungsvorrichtungen angeordnet sein, wobei die beiden Beleuchtungsvorrichtungen beabstandet sein können. Besonders bevorzugt sind die zwei Beleuchtungsvorrichtungen symmetrisch angeordnet.

In einer weiteren Ausführungsform der Erfindung ist die wenigstens eine erste Beleuchtungsvorrichtung im mittleren Bereich angeordnet, wobei der mittlere Bereich der als der auf Sichthöhe einer Person im Unterseeboot betrachtet wird. Insbesondere erstreckt der mittlere Bereich sich von 80 cm über dem Boden des Decks bis 2 m über dem Boden des Decks. Hierdurch wird der Eindruck eines Fensters verstärkt.

In einer weiteren Ausführungsform der Erfindung ist die wenigstens eine erste Beleuchtungsvorrichtung im Wohn- und/oder Aufenthaltsbereich des Unterseeboots angeordnet. Besonders bevorzugt ist die wenigstens eine erste Beleuchtungsvorrichtung oder eine Mehrzahl an Beleuchtungsvorrichtungen ausschließlich im Wohn- und/oder Aufenthaltsbereich des Unterseeboots angeordnet. Eine Anordnung beispielsweise im Maschinenraum ist wenig sinnvoll und insbesondere in der Operationszentrale möglicherweise störend. Da in einem Unterseeboot 24 Stunden am Tag gearbeitet werden muss, ist insbesondere in diesen Bereichen eine die Arbeitskonzentration fördernde und in Unterseebooten übliche Beleuchtung sinnvoll. Zudem würde hier die Komplexität des Unterseeboots gesteigert ohne dass ein äquivalenter Vorteil bei der bisher üblichen Verwendung von Unterseebooten entstünde.

In einer weiteren Ausführungsform der Erfindung ist die wenigstens eine erste Beleuchtungsvorrichtung zur örtlich aufgelösten Wiedergabe verschiedener Farbtemperaturen ausgebildet. Unter örtlich aufgelöster Wiedergabe kann ein Farbtemperaturverlauf bis zu einer Bildwiedergabe umfasst sein. Bevorzugt handelt es sich jedoch ausschließlich um die Wiedergabe eines Farbtemperaturverlaufs, um die Komplexität gering zu halten.

In einer weiteren Ausführungsform der Erfindung weist die wenigstens eine erste Beleuchtungsvorrichtung wenigstens eine erste Halterung zur Befestigung der wenigstens einen ersten Beleuchtungsvorrichtung am Unterseeboot auf.

In einer weiteren Ausführungsform der Erfindung weist das Unterseeboot wenigstens eine erste Halteschiene auf, wobei die wenigstens eine erste Halteschiene zwischen zwei benachbarten Spanten parallel zu den Spanten angeordnet ist. Die wenigstens eine erste Halteschiene weist eine Oberseite, eine erste Seitenwand und eine zweite Seitenwand auf, wobei die erste Seitenwand und die zweite Seitenwand bereichsweise Haltestege aufweisen. Die Haltestege sind unterhalb der Oberseite angeordnet. Die wenigstens eine erste Halterung der wenigstens einen ersten Beleuchtungsvorrichtung weist ein Trägerelement auf, wobei das Trägerelement formschlüssig zwischen die erste Seitenwand und die zweite Seitenwand einfügbar ist, sodass die Haltestege unter das Trägerelement greifen. Zur Anbringung wird die wenigstens eine erste Beleuchtungsvorrichtung somit zwischen die Spanten eingeführt und dann parallel zu den Spanten verschoben, um die wenigstens eine erste Beleuchtungsvorrichtung zu befestigen.

Diese U-förmige Konstruktion aus Oberseite und Stirnwänden ist besonders zur schocksicheren Befestigung geeignet. Das Trägerelement greift in diese U-förmige Konstruktion ein. Durch Verschieben der Beleuchtungsvorrichtung und damit des Trägerelements bei der Montage kommt das Trägerelement oberhalb der Haltestege in Position und wird so gehalten.

In einer weiteren Ausführungsform der Erfindung ist zwischen Trägerelement und Oberseite wenigstens ein erstes Formelement einführbar. Das wenigstens eine erste Formelement kann beispielsweise aus geschäumten Material ausgeführt sein, beispielsweise PU-Schaum. Dieses Formelement ermöglicht bei der Montage ausreichend Spiel zu lassen, andererseits im Schockfall eine sichere Halterung zu gewährleisten. Besonders bevorzugt wird eine Mehrzahl an Formelementen verwendet, welche nacheinander zwischen Trägerelement und Oberseite geschoben werden und so den Hohlraum praktisch vollständig ausfüllen.

In einer weiteren Ausführungsform der Erfindung verlaufen die erste Seitenwand und die zweite Seitenwand in Richtung zur wenigstens einen ersten Beleuchtungsvorrichtung verjüngend. Hierdurch wird erreicht, dass das Trägerelement praktisch festgekeilt wird.

In einer weiteren Ausführungsform der Erfindung weist das Unterseeboot zwischen zwei benachbarten Spanten zwei parallele Halteschienen auf und die wenigstens eine erste Beleuchtungsvorrichtung weist zwei parallele Trägerelemente auf.

In einer weiteren Ausführungsform der Erfindung ist die wenigstens eine erste Halteschiene über wenigstens einen ersten Steg mit den Spanten verbunden. Hierdurch muss die Halteschiene nicht direkt am Druckkörper befestigt werden, was aufgrund der Druckfestigkeit des Druckkörpers bevorzugt ist. In einer Weiterbildung dieser Ausführungsform sind die Spanten an den Verbindungsstellen strukturell verstärkt, beispielsweise durch eine zusätzliche, lokale Materialdicke.

In einer weiteren Ausführungsform der Erfindung erstreckt sich die Halterung über wenigstens 80 % der einen Ausdehnungsrichtung der wenigstens einen ersten Beleuchtungsvorrichtung. Besonders bevorzugt ist die Halterung parallel zu den Spanten angeordnet.

In einer weiteren Ausführungsform der Erfindung weist die wenigstens eine erste Beleuchtungsvorrichtung eine Länge von 50 cm bis 200 cm auf.

In einer weiteren Ausführungsform der Erfindung weist das Unterseeboot eine erste Gruppe von Beleuchtungsvorrichtungen und eine zweite Gruppe von Beleuchtungsvorrichtungen auf, wobei die erste Gruppe steuerbordseitig angeordnet ist und wobei die zweite Gruppe backbordseitig angeordnet ist. Die Beleuchtungsvorrichtungen innerhalb einer Gruppe sind benachbart zueinander zwischen den Spanten angeordnet. Hierdurch wird der Charakter eines Panoramafensters gesteigert. Außerdem ermöglicht diese Anordnung zum Beispiel bei einem simulierten Sonnenaufgang oder Sonnenuntergang die Färbung des Himmels ortsaufgelöst (Ost und West) wiederzugeben.

Nachfolgend ist das erfindungsgemäße Unterseeboot anhand eines in den Zeichnungen dargestellten Ausführungsbeispiels näher erläutert.
- Fig. 1: erster schematischer Querschnitt
- Fig. 2: zweiter schematischer Querschnitt
- Fig. 3: erster schematischer Querschnitt durch eine Halteschiene
- Fig. 4: zweiter schematischer Querschnitt durch eine Halteschiene
- Fig. 5: schematische Aufsicht unter Weglassung des Druckkörpers

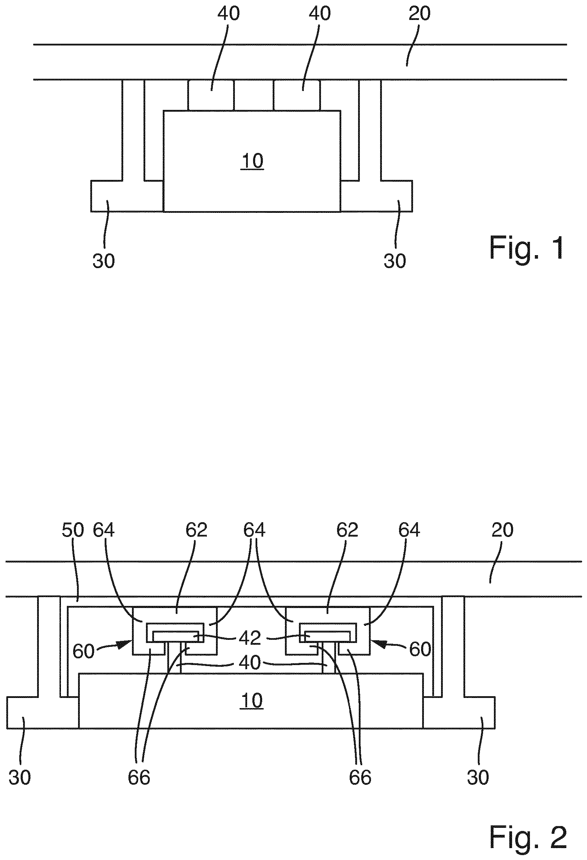

In Fig. 1 ist ein erster schematischer Querschnitt gezeigt, bei welchem eine Beleuchtungsvorrichtung 10 zwischen zwei Spanten 30 des Druckkörpers 20 angeordnet ist. Die Beleuchtungsvorrichtung 10 weist zwei Halterungen 40, über welche die Beleuchtungsvorrichtung mit dem Unterseeboot verbunden ist. Die Beleuchtungsvorrichtung 10 ist ausschließlich zwischen den Spanten 30 angeordnet und erstreckt sich nicht über die Spanten 30 in das Innere des Unterseeboots. Durch die Anordnung zwischen den Spanten 30 wird zum einen der Charakter eines Fensters verstärkt, zum anderen wird Platz genutzt, welcher nur bedingt anderweitig genutzt werden kann.

Zwar ist es theoretisch möglich, dass die Beleuchtungsvorrichtung 10 über Halterungen 40 direkt mit dem Druckkörper 20 des Unterseeboots verbunden wird, wie in Fig. 1 gezeigt. Dieses ist jedoch nicht unbedingt bevorzugt, da hierdurch es zu einer Veränderung der Eigenschaften des Druckkörpers 20 kommen kann. Fig. 2 zeigt daher eine alternative und bevorzugte Ausführungsform in einem zweiten schematischen Querschnitt. Zusätzlich zu den in Fig. 1 gezeigten Elementen ist ein Steg 50 vorhanden, welcher an den Spanten 30 befestigt, beispielsweise verschraubt oder genietet ist. Hierdurch wird eine Beschädigung oder Beeinträchtigung des Druckkörpers 20 vermieden. An dem Steg 50 sind zwei Halteschienen 60 befestigt, beispielsweise verschweißt. Die Halteschienen 60 bestehen aus einer Oberseite 62 und zwei Seitenwände 64. An der Unterseite der Seitenwände 64 sind Haltestege 66 angeordnet, sodass die Trägerelemente 42 der Halterungen 40 durch die Haltestege 66 gehalten werden.

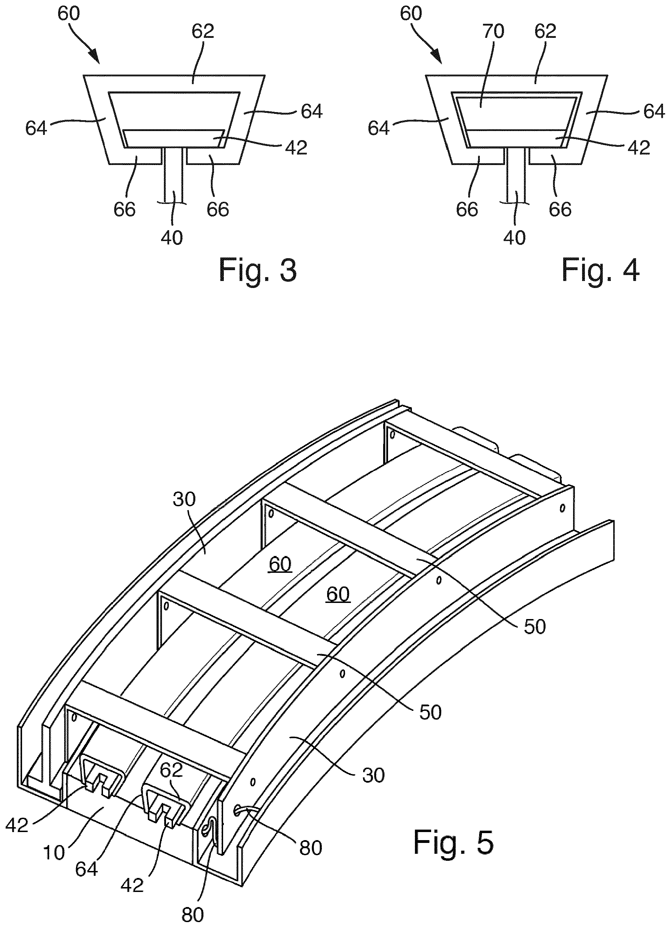

Fig. 3 zeigt einen ersten schematischen Querschnitt durch eine Halteschiene 60, wobei die Seitenwände 64 nach unten verjüngend ausgeführt sind. Um die Schocksicherheit zu erhöhen, kann in den entstehenden Hohlraum ein Formkörper 70 eingebracht werden, wie im zweiten schematischen Querschnitt in Fig. 4 zu erkennen ist.

Eine perspektivische Aufsicht ist in Fig. 5 gezeigt. Gut erkennbar ist der gekrümmte Verlauf der Spanten 30, welcher dem Druckkörper 20 folgt. Die Beleuchtungsvorrichtung 10 ist dem Krümmungsverlauf des Druckkörpers 20 angepasst und fügt sich so zwischen die Spanten 30 ein. Erkennbar sind vier Stege 50, welche mit den Spanten 30 verschraubt sind. Des Weiteren ist ein Kabel 80 gezeigt, über welches die Beleuchtungsvorrichtung 10 mit Energie versorgt und angesteuert werden kann.

In Fig. 5 ist gut erkennbar, dass zur Montage der Beleuchtungsvorrichtung 10 kein Platz zur Verfügung steht, um diese beispielsweise anzuschrauben oder zu verschweißen. Daher wird das Trägerelement 42 vorzugsweise von einer Seite in die Halteschiene 60 eingeführt und durch Verschwenkung entlang der Krümmung befestigt. Anschließend werden vorzugsweise mehrere Formelemente 70 in den Freiraum eingeführt, um eine schocksichere Halterung zu optimieren.

### Bezugszeichen

- 10: Beleuchtungsvorrichtung
- 20: Druckkörper
- 30: Spant
- 40: Halterung
- 42: Trägerelement
- 50: Steg
- 60: Halteschiene
- 62: Oberseite
- 64: Seitenwand
- 66: Haltesteg
- 70: Formelement
- 80: Kabel

## Patentansprüche

1. Unterseeboot mit wenigstens einer ersten Beleuchtungsvorrichtung (10), wobei das Unterseeboot einen Druckkörper (20) aufweist, wobei der Druckkörper (20) Spanten (30) aufweist, wobei die wenigstens eine erste Beleuchtungsvorrichtung (10) zur Erzeugung verschiedener Farbtemperaturen ausgebildet ist, wobei die wenigstens eine erste Beleuchtungsvorrichtung (10) zwischen den Spanten (30) des Druckkörpers (20) des Unterseeboots angeordnet ist, wobei die wenigstens eine erste Beleuchtungsvorrichtung (10) dem Krümmungsverlauf des Druckkörpers (20) angepasst ist, **dadurch gekennzeichnet, dass** die wenigstens eine erste Beleuchtungsvorrichtung (10) zur tageszeitspezifischen Wiedergabe der Farbtemperatur des Himmels ausgebildet ist.

2. Unterseeboot nach Anspruch 1, **dadurch gekennzeichnet, dass** die wenigstens eine erste Beleuchtungsvorrichtung (10) ausschließlich zwischen den Spanten (30) angeordnet ist und sich nicht über die Spanten (30) in das Innere des Unterseeboots erstreckt.

3. Unterseeboot nach einem der vorstehenden Ansprüche, **dadurch gekennzeichnet, dass** die wenigstens eine erste Beleuchtungsvorrichtung (10) zwischen zwei benachbarten Spanten vollflächig angeordnet ist.

4. Unterseeboot nach einem der vorstehenden Ansprüche, **dadurch gekennzeichnet, dass** die wenigstens eine erste Beleuchtungsvorrichtung (10) im Wohn- und/oder Aufenthaltsbereich des Unterseeboots angeordnet ist.

5. Unterseeboot nach einem der vorstehenden Ansprüche, **dadurch gekennzeichnet, dass** die wenigstens eine erste Beleuchtungsvorrichtung (10) zur örtlich aufgelösten Wiedergabe verschiedener Farbtemperaturen ausgebildet ist.

6. Unterseeboot nach einem der vorstehenden Ansprüche, **dadurch gekennzeichnet, dass** die wenigstens eine erste Beleuchtungsvorrichtung (10) wenigstens eine erste Halterung (40) zur Befestigung der wenigstens einen ersten Beleuchtungsvorrichtung (10) am Unterseeboot aufweist.

7. Unterseeboot nach Anspruch 6, **dadurch gekennzeichnet, dass** das Unterseeboot wenigstens eine erste Halteschiene (60) aufweist, wobei die wenigstens eine erste Halteschiene (60) zwischen zwei benachbarten Spanten (30) parallel zu den Spanten (30) angeordnet ist, wobei die wenigstens eine erste Halteschiene (60) eine Oberseite (62), eine erste Seitenwand (64) und eine zweite Seitenwand (64) aufweist, wobei die erste Seitenwand (64) und die zweite Seitenwand (64) bereichsweise Haltestege (66) aufweisen, wobei die Haltestege (66) unterhalb der Oberseite (62) angeordnet sind, wobei die wenigstens eine erste Halterung (40) der wenigstens einen ersten Beleuchtungsvorrichtung (10) ein Trägerelement (42) aufweist, wobei das Trägerelement (42) formschlüssig zwischen die erste Seitenwand (64) und die zweite Seitenwand (64) einfügbar ist, sodass die Haltestege (66) unter das Trägerelement (42) greifen.

8. Unterseeboot nach Anspruch 7, **dadurch gekennzeichnet, dass** zwischen Trägerelement (42) und Oberseite (62) wenigstens ein erstes Formelement (70) einführbar ist.

9. Unterseeboot nach einem der Ansprüche 7 bis 8, **dadurch gekennzeichnet, dass** die erste Seitenwand (64) und die zweite Seitenwand (64) in Richtung zur wenigstens einen ersten Beleuchtungsvorrichtung (10) verjüngend verlaufen.

10. Unterseeboot nach einem der Ansprüche 7 bis 9, **dadurch gekennzeichnet, dass** das Unterseeboot zwischen zwei benachbarten Spanten (30) zwei parallele Halteschienen (60) aufweist und dass die wenigstens eine erste Beleuchtungsvorrichtung (10) zwei parallele Trägerelemente (42) aufweist.

11. Unterseeboot nach einem der Ansprüche 7 bis 10, **dadurch gekennzeichnet, dass** die wenigstens eine erste Halteschiene (60) über wenigstens einen ersten Steg (50) mit den Spanten (30) verbunden ist.

12. Unterseeboot nach einem der Ansprüche 6 bis 11, **dadurch gekennzeichnet, dass** die Halterung (40) sich über wenigstens 80 % der Ausdehnung der wenigstens einen ersten Beleuchtungsvorrichtung (10) erstreckt.

13. Unterseeboot nach einem der vorstehenden Ansprüche, **dadurch gekennzeichnet, dass** die wenigstens eine erste Beleuchtungsvorrichtung (10) eine Länge von 50 cm bis 200 cm aufweist.

14. Unterseeboot nach einem der vorstehenden Ansprüche, **dadurch gekennzeichnet, dass** das Unterseeboot eine erste Gruppe von Beleuchtungsvorrichtungen (10) und eine zweite Gruppe von Beleuchtungsvorrichtungen (10) aufweist, wobei die erste Gruppe steuerbordseitig angeordnet ist, wobei die zweite Gruppe backbordseitig angeordnet ist, wobei Beleuchtungsvorrichtungen (10) innerhalb einer Gruppe benachbart zueinander zwischen den Spanten (30) angeordnet sind.

## Claims

1. Submarine having at least one first lighting device (10), the submarine having a pressure hull (20), the pressure hull (20) having ribs (30), the at least one first lighting device (10) being designed to generate different color temperatures, the at least one first lighting device (10) being arranged between the ribs (30) of the pressure hull (20) of the submarine, the at least one first lighting device (10) being adapted to the curvature of the pressure hull (20) , **characterized in that** the at least one first lighting device (10) is designed to reproduce the colour temperature of the sky in a time-of-day-specific manner.

2. Submarine according to claim 1, **characterized in that** the at least one first lighting device (10) is arranged exclusively between the ribs (30) and does not extend over the ribs (30) into the interior of the submarine.

3. Submarine according to one of the preceding claims, **characterized in that** the at least one first lighting device (10) is arranged over the entire surface between two adjacent ribs.

4. Submarine according to one of the preceding claims, **characterized in that** the at least one first lighting device (10) is arranged in the living and/or recreation area of the submarine.

5. Submarine according to one of the preceding claims, **characterized in that** the at least one first lighting device (10) is designed for the spatially resolved reproduction of different colour temperatures.

6. Submarine according to one of the preceding claims, **characterized in that** the at least one first lighting device (10) has at least one first holder (40) for fastening the at least one first lighting device (10) to the submarine.

7. Submarine according to claim 6, **characterized in that** the submarine has at least one first retaining rail (60), the at least one first retaining rail (60) being arranged between two adjacent ribs (30) parallel to the ribs (30), the at least one first retaining rail (60) having an upper side (62), a first side wall (64) and a second side wall (64), the first side wall (64) and the second side wall (64) having retaining webs (66) in some regions, wherein the retaining webs (66) are arranged below the upper side (62), wherein the at least one first holder (40) of the at least one first lighting device (10) has a support element (42), wherein the support element (42) can be inserted in a form-fitting manner between the first side wall (64) and the second side wall (64), so that the retaining webs (66) engage under the support element (42).

8. Submarine according to claim 7, **characterized in that** at least one first shaping element (70) can be introduced between the carrier element (42) and the upper side (62).

9. Submarine according to one of claims 7 to 8, **characterized in that** the first side wall (64) and the second side wall (64) taper in the direction of the at least one first lighting device (10).

10. Submarine according to one of claims 7 to 9, **characterized in that** the submarine has two parallel support rails (60) between two adjacent ribs (30) and **in that** the at least one first lighting device (10) has two parallel support elements (42).

11. Submarine according to one of claims 7 to 10, **characterized in that** the at least one first retaining rail (60) is connected to the ribs (30) via at least one first web (50).

12. Submarine according to any one of claims 6 to 11, **characterized in that** the holder (40) extends over at least 80% of the extent of the at least one first lighting device (10).

13. Submarine according to one of the preceding claims, **characterized in that** the at least one first lighting device (10) has a length of 50 cm to 200 cm.

14. A submarine according to any one of the preceding claims, **characterized in that** the submarine comprises a first group of lighting devices (10) and a second group of lighting devices (10), the first group being arranged on the starboard side, the second group being arranged on the port side, wherein lighting devices (10) within a group are arranged adjacent to each other between the ribs (30).

## Revendications

1. Sous-marin comportant au moins un premier dispositif d'éclairage (10), le sous-marin comportant une coque de pression (20), la coque de pression (20) comportant des nervures (30), le au moins un premier dispositif d'éclairage (10) étant conçu pour générer différentes températures de couleur, le au moins un premier dispositif d'éclairage (10) étant disposé entre les nervures (30) de la coque de pression (20) du sous-marin, le au moins un premier dispositif d'éclairage (10) étant adapté à la courbure de la coque de pression (20) , **caractérisé en ce que** le au moins un premier dispositif d'éclairage (10) est conçu pour reproduire la température de couleur du ciel en fonction de l'heure du jour.

2. Sous-marin selon la revendication 1, **caractérisé par le fait que** le au moins un premier dispositif d'éclairage (10) est disposé exclusivement entre les nervures (30) et ne s'étend pas au-dessus des nervures (30) à l'intérieur du sous-marin.

3. Sous-marin selon l'une des revendications précédentes, **caractérisé en ce que** le au moins un premier dispositif d'éclairage (10) est disposé sur toute la surface entre deux nervures adjacentes.

4. Sous-marin selon l'une des revendications précédentes, **caractérisé en ce que le au** moins un premier dispositif d'éclairage (10) est disposé dans la zone de vie et/ou de loisirs du sous-marin.

5. Sous-marin selon l'une des revendications précédentes, **caractérisé par le fait que** l'au moins un premier dispositif d'éclairage (10) est conçu pour la reproduction résolue dans l'espace de différentes températures de couleur.

6. Sous-marin selon l'une des revendications précédentes, **caractérisé en ce que l'au moins** un premier dispositif d'éclairage (10) comporte au moins un premier support (40) pour fixer l'au moins un premier dispositif d'éclairage (10) au sous-marin.

7. Sous-marin selon la revendication 6, **caractérisé en ce que** le sous-marin a au moins un premier rail de retenue (60), le au moins un premier rail de retenue (60) étant disposé entre deux nervures adjacentes (30) parallèlement aux nervures (30), le au moins un premier rail de retenue (60) ayant un côté supérieur (62), une première paroi latérale (64) et une deuxième paroi latérale (64), la première paroi latérale (64) et la deuxième paroi latérale (64) ayant des bandes de retenue (66) dans certaines régions, dans lequel au moins un premier support (40) d'au moins un premier dispositif d'éclairage (10) comporte un élément de support (42), dans lequel l'élément de support (42) peut être inséré de manière ajustée entre la première paroi latérale (64) et la deuxième paroi latérale (64), de sorte que les bandes de retenue (66) s'engagent sous l'élément de support (42).

8. Sous-marin selon la revendication 7, **caractérisé par le fait qu'au** moins un premier élément de mise en forme (70) peut être introduit entre l'élément porteur (42) et la face supérieure (62).

9. Sous-marin selon l'une des revendications 7 à 8, **caractérisé par le fait que** la première paroi latérale (64) et la deuxième paroi latérale (64) se rétrécissent en direction du au moins un premier dispositif d'éclairage (10).

10. Sous-marin selon l'une des revendications 7 à 9, **caractérisé par le fait que** le sous-marin comporte deux rails de support parallèles (60) entre deux nervures adjacentes (30) et **par le fait que** l'au moins un premier dispositif d'éclairage (10) comporte deux éléments de support parallèles (42).

11. Sous-marin selon l'une des revendications 7 à 10, **caractérisé par le fait que** l'au moins un premier rail de retenue (60) est relié aux nervures (30) par l'intermédiaire d'au moins une première bande (50).

12. Sous-marin selon l'une des revendications 6 à 11, **caractérisé par le fait que** le support (40) s'étend sur au moins 80 % de l'étendue du au moins un premier dispositif d'éclairage (10).

13. Sous-marin selon l'une des revendications précédentes, **caractérisé par le fait que** le au moins un premier dispositif d'éclairage (10) a une longueur de 50 cm à 200 cm.

14. Sous-marin selon l'une quelconque des revendications précédentes, **caractérisé en ce que** le sous-marin comprend un premier groupe de dispositifs d'éclairage (10) et un second groupe de dispositifs d'éclairage (10), le premier groupe étant disposé du côté tribord, le second groupe étant disposé du côté bâbord, les dispositifs d'éclairage (10) d'un groupe étant disposés de manière adjacente entre les nervures (30).
